# EUROPEAN PATENT APPLICATION

(11) **EP 3 354 409 A1**
(43) Date of publication of application: **01.08.2018**
(21) Application number: 18154372.9
(22) Date of filing: 31.01.2018
(51) Int. Cl.: B25B 27/00, B01D 65/00, B25B 27/02

(54) **COMPRESSOR FILTER TOOL USEFUL IN SERVICE CALLS**

(30) Priority: 31.01.2017 US 201715420632
(71) Applicant: Ingersoll-Rand Company, Davidson, NC 28036 (US)
(72) Inventor: COOPER, Jeffrey Arthur, Huntersville, NC North Carolina 28078 (US); HARRIS, Christopher Irving, Charlotte, NC North Carolina 28209 (US); SMITH, Anthony, Troutman, NC North Carolina 28166 (US); BOCANEGRA, Ovidio, Charlotte, NC North Carolina 28269 (US)
(74) Representative: Haseltine Lake LLP

(57) **Abstract**

A filter capture tool (80) and filter removal tool (82) useful to extract a filter from a compressor filter housing is disclosed. The filter capture tool (80) and filter removal tool (82) can be used separate an in some forms can be used independent of the other. In one form the filter capture tool (80) can be inserted into a central open space of a filter element at which point a number of arms (90) can be deployed from the capture tool to engage an interior surface and thereby capture the filter element. The filter removal tool includes an extension member (108) that can be deployed from a base connected to a filter housing. The extension member can be connected to an arm (112) which reaches from the base of the removal tool to the filter element to assist in removing the element from the interior of the filter housing.

## Description

### TECHNICAL FIELD

The present invention generally relates to compressor system filter servicing, and more particularly, but not exclusively, to tools used to capture and/or remove compressor filters from filter housings.

### BACKGROUND

Providing tools useful to remove filters from filter housings remains an area of interest. Some existing systems have various shortcomings relative to certain applications. Accordingly, there remains a need for further contributions in this area of technology.

### SUMMARY

One embodiment of the present invention is a unique tool useful to service a compressor. Other embodiments include apparatuses, systems, devices, hardware, methods, and combinations for servicing compressor system filters. Further embodiments, forms, features, aspects, benefits, and advantages of the present application shall become apparent from the description and figures provided herewith.

### BRIEF DESCRIPTION OF THE FIGURES

FIG. 1 depicts one embodiment of a compressor system.
FIG. 2 depicts various aspects of one embodiment of a filter.
FIG. 3 depicts one embodiment of a filter capture tool.
FIG. 4 depicts an embodiment of a filter removal tool.
FIG. 5 depicts an embodiment of a filter removal tool.
FIG. 6 depicts an embodiment of a filter removal tool.
FIG. 7 depicts an embodiment of a filter removal tool.
FIG. 8 depicts an embodiment of a filter removal tool.
FIG. 9 depicts operation of one embodiment of a filter removal tool.
FIG. 10 depicts operation of one embodiment of a filter removal tool.
FIG. 11 depicts operation of one embodiment of a filter removal tool.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

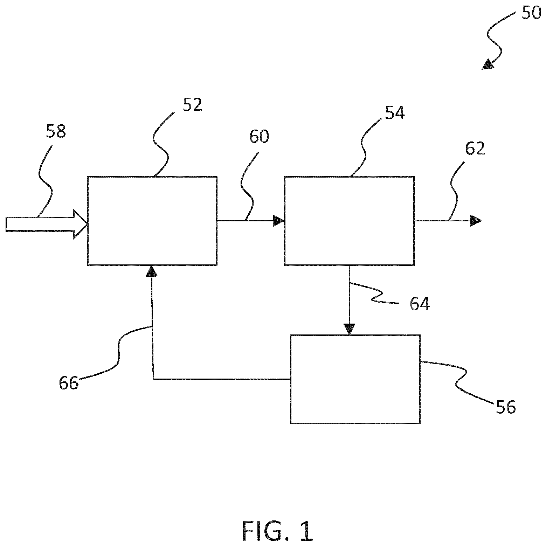

With reference to FIG. 1, one embodiment of a compressor system 50 is shown which includes a compressor 52, a separator 54, and a filter 56. The compressor 52 is used to pressurize an incoming gas 58 during which process it produces a mixed flow 60 of compressed gas and a byproduct of compression which is often an entrained stream of coolant or lubricant (e.g. a lubricant or coolant mist produced as a result of being used in the compression process of an oil filled screw compressor, among other possibilities). Further discussion below may refer to the byproduct of compression as the lubricant and/or the coolant, but no limitation is hereby intended regarding the use of the byproduct whether solely as a lubricant or solely as a coolant. Mention of either lubricant or coolant refers generally to the byproduct and not the intended use of the byproduct. Thus, any mention of lubricant can apply equally to the byproduct used primarily as a coolant, and vice versa.

The compressor 52 can take on any variety of forms, and in one nonlimiting embodiment is a contact cooled compressor useful to compress a flow of air. The separator 54 is used to separate the mixed flow 60 to produce a cleaner flow compressed gas 62 and a flow of coolant/lubricant 64. The filter 56 can return a cleaner flow of lubricant/coolant 66 to the compressor 52 while retaining contaminant in a filtering media. Though the compressor system 50 is shown with just a compressor 52, separator 54, and filter 56, other embodiments can include further devices, such as dryers, etc.

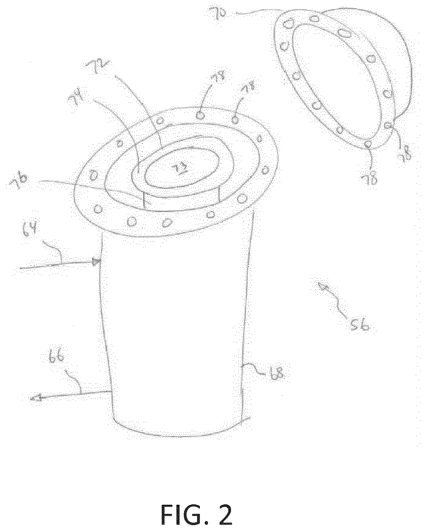

Turning now to FIG. 2, a schematic is shown of one embodiment of the filter 56 which includes a filter housing 68, housing cover 70, and filter element 72. Though the filter element 72 can be any shape, size, configuration, etc, the illustrated form depicts the element 72 having an annular shape with open interior 73, a filter flange 74 located near the top, and a filter media 76 beneath the flange 74. During installation and/or servicing of the filter element 72 the cover 70 is removed to gain access to the interior of the filter housing 68. The cover 70 can be coupled to the housing 68 using any variety of forms, and in one nonlimiting embodiment is affixed using a series of bolts or threaded lugs passed into either or both of holes 78 in the cover 70 and/or housing 68. To set forth just one nonlimiting embodiment, bolts can be passed through holes 78 in the cover 70 and into apertures 78 in the housing 68. The bolts can be affixed using nuts on the underside of a flange in the housing 68, or can be received in tapped apertures formed in the housing 68.

Although the embodiment discussed above in FIG. 2 (and referred in the description below) is described relative to the filter 56, it will be appreciated that such housing and element 72 can be equally applicable to the separator 54. For example, some embodiments of the separator 54 can include a separator element that assists in separating lubricant from the compressed gas, but in so doing also performs a filtering function. Examples of such a device can include a separator element having a filtering media of glass fibers. The separator element, therefore, can serve as a filter. Thus, any mention herein of a filter element, filter, etc can be equally applicable to a separator and separator element that functions as a filter. No limitation is intended, and nothing can be construed, as limiting a filter element to just those elements associated with a filter mechanism placed downstream of a separator. Those elements within separators that also serve in some role as filters are also to be included.

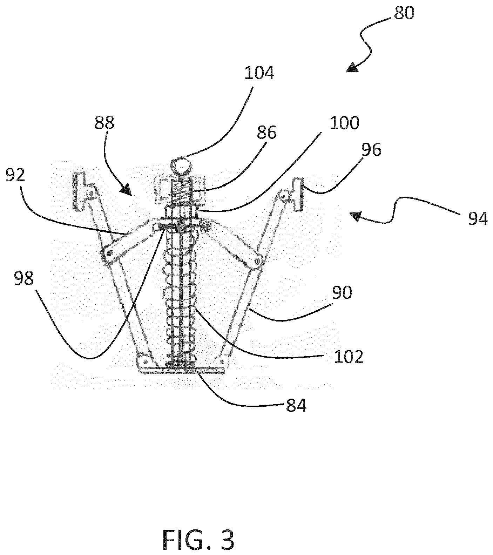

FIGS. 3-6 depicts various embodiments of a filter capture tool 80 and a filter removal tool 82 a useful to extract the filter element 72 from the filter housing 68 and/or replace the filter element 72 into the housing 68. Such devices can be used as aids in removing heavy and/or awkward filters. In some applications the filter intended to be serviced can weigh close to 80 pounds.

FIG. 3 depicts one form of the filter capture tool 80 which includes a base 84, a central shaft 86 that extends from the base 84, and a collar 88 which can be adjusted in position along the length of the shaft 86. The capture tool 80 also includes arms 90 which extend from the base 84 and are connected to the collar 88 via linkage 92. The arms 90 in the illustrated embodiment are coupled to the base via a pivoting connection (e.g. a hinge or pin, etc) and connected to the linkage 92 via a pivoting connection (e.g. a hinge or pin, etc). The linkage 92 in the illustrated embodiment is also coupled to the collar 88 via a pivoting connection (e.g. a hinge or pin, etc). Movement of the collar 88 along the central shaft 86 causes corresponding movement in the linkage 92 and arm 90. Downward movement of the collar 88 causes the arms 90 to deploy radially outward away from the shaft 86.

The arms 90 include an engagement surface 94 typically but not always located at the end which is used to press against the inside of the filter element 72 as the arms 90 are deployed. The illustrated embodiment depict one nonlimiting form of an engagement surface 94 in the form of contact pads 96 which are attached to the arms 90 through a pivoting arrangement. The contact pads 96 can include any type of material and arrangement sufficient to engage and capture the filter element 72 for removal from the housing 68. In one nonlimiting form the contact pads 96 can be rubber pads.

Though the illustrated embodiment depicts the capture tool 80 with two separate arms 90, any number of arms can be used. In one nonlimiting embodiment, the capture tool 80 includes three separate arms that can be arranged equidistant from one another. Additionally and/or alternatively, the arms 90 can provide about 18" diameter in the deployed position when used to engage the inner side of the filter element 72.

In one form the central shaft 86 includes a registration surface which is complementary to a registration surface in the collar 88, where the interaction of the registration surfaces enables relative movement between the collar 88 and the central shaft 86. In one nonlimiting form the central shaft 86 is threaded and is structured to engage a threaded nut in the collar 88.

The collar 88 can take on a variety of forms useful to move along the central shaft 86 and actuate the arms 90 between their retracted and deployed positions. In one form depicted in FIG. 3, the collar 88 includes a platform 98 which supports a rotatable nut 100 captured by the platform 98 but otherwise free to turn relative to the platform 98. The platform 98 can provide the structural connection point to the linkages 92.

The collar 88 can, but need not, include and/or be connected to the base 84 with an energy storage device. In one form the energy storage device is a spring 102. The energy storage device can be used to oppose motion of the collar 88 in a certain direction. For example, the spring 102 can be attached to the base 84 and pre-loaded to force the arms 90 in a deployed condition so that during removal of the filter element 72 from the housing 68 the capture tool 80 maintains a positive grip on the filter element 72 to prevent inadvertent retraction of the arms 90 and subsequent dropping of the element 72. Other conditions are also contemplated.

The filter capture tool 80 can include a connection point useful to engage the filter removal tool 82. Such a connection point can take on many forms, one nonlimiting example of which is found in ring 104 illustrated in FIG. 3. The connection point can be an enclosed ring, a hook, a D loop, an aperture through which a bolt can be passed to attach the capture tool 80 to the removal tool 82, etc etc. In one form the filter capture tool 80 may not include such a connection point, but rather a filter element 72 itself may include such an attachment point. For example, the filter element 72 could be formed or be connected with a member useful to connect to the removal tool 82. In one nonlimiting example, the filter element 72 itself may include a connection point, such as a bracket, spanner, etc that extends into and/or across the open space 73. In such an embodiment the filter capture tool 80 may not be needed and only the removal tool 82 used to extract a filter element 72 from the filter housing 68.

Various embodiments are contemplated for either a connection point associated with the filter, a mechanism coupled to the filter, or the filter capture tool 80. Any of the connection types contemplated for one applies equally to the others. Thus, in some forms while it is contemplated for the filter element to have three D-rings on the top for attachment to the removal tool (either aligned in a line, side by side, etc to provide various attachment points), it would also be contemplated that the same arrangement of multiple D-rings could also be used for the other connection points associated with the filter.

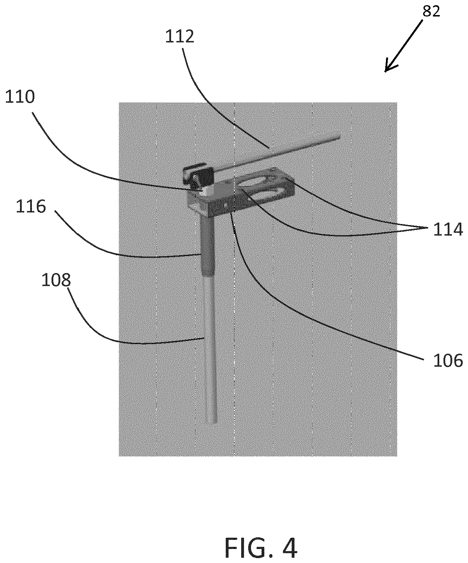

FIGS. 4-6 depict an embodiment of the filter removal tool 82 which includes a base 106, extension member 108, driver 110, and arm 112. The filter removal tool 82 can be secured in place using an anchor to remove the filter element 72 from the filter housing 68. Such an anchor can take many forms and can be secured to a number of different items, such as but not limited to the filter housing 68.

An anchor point formed in the base 106 can take on a number of different configurations, shapes and/or sizes. In one nonlimiting example, the filter removal tool 82 can be attached to the holes 78 of the housing 68 through use of the same bolt used to secure the cover 70 to the housing 68. The anchor points can alternatively be a lug or other suitable device that extends from the base 106 or the housing 68 to provide attachment of the base 106. In those cases using a bolt or other suitable device, such a bolt can be inserted into holes 114 formed in the base 106. In another additional and/or alternative embodiment the anchor points can include abutment surface whether or not formed as an enclosed passage. For example, an anchor point can take the form of a concave half-moon shape in lieu of a fully enclosed hole.

Anchor points whether or not in the form of bolts and bolt holes can be a single attachment/load point, but other embodiments can take on any number of attachment points or load paths. To set forth just one nonlimiting example, four holes 114 are depicted in the illustrated embodiment of the base 106, but fewer or more holes 114 can be provided. Furthermore, though more than one anchor point can be provided, not all anchor points need be used in any given application. In those embodiments which include more than one anchor point, the various anchor points can, but need not, be identical as in the illustrated embodiment. For example, one anchor point in a multi-anchor point embodiment can be a through-hole to receive a bolt while the other anchor point is a lug. Other variations are also contemplated.

Depending on the specific configuration of the filter housing 68, the anchor point(s) can be tailored to match corresponding attachment points in the compressor filter housings 68. For example, the holes 114 can be arranged to be adapted to any different number of housings 68. For example, the holes 114 on the near side of the base 106 (i.e. those with the lead lines attached) can be spaced apart to fit one type of housing 68, the holes on the other size of the base can be spaced apart to fit another type of housing, etc. The base 106 is depicted as a rectangular box having an open interior with cutouts formed in each side, but other variations are also contemplated herein. Given the nature of the loads imparted to the base 106 during operation of the tool 82, however, the base 106 is structured to carry both normal loads and torques as the filter element 72 is extracted from the housing 68.

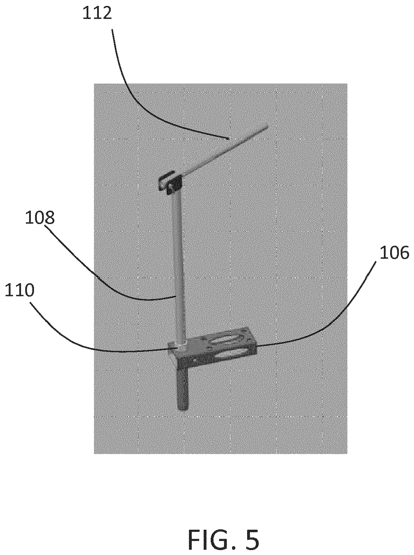

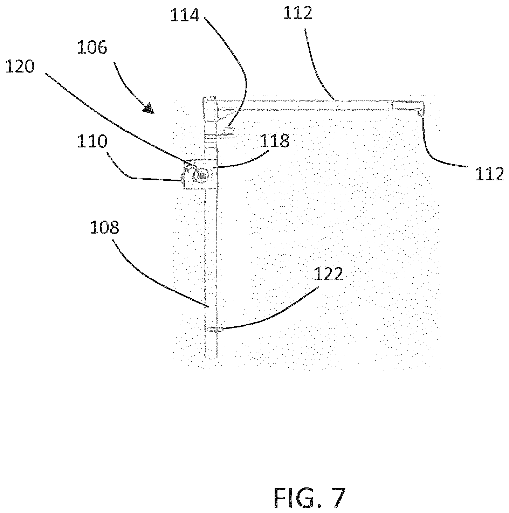

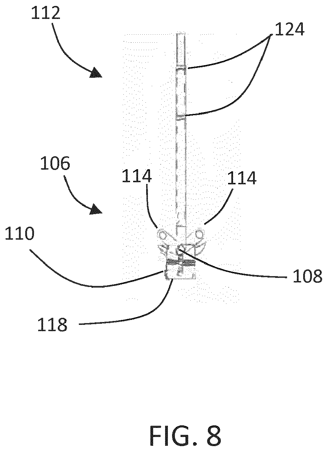

The extension member 108 is capable of being moved relative to the base 106 between a retracted position (best seen in FIG. 4) and an extended position (best seen in FIG. 5). The driver 110 or other suitable technique can be used to raise and lower the extension member 108. In one form the extension member 108 includes a registration surface that cooperates with a complementary surface in the driver 110. One non-limiting embodiment includes the driver 110 in the form of a nut capable of being turned and structured to engage a raised surface on the extension member 108. The registration surface on the extension member 108 can be a rack that is moved by an associated pinion or other suitable device. Other forms of the driver 10 are contemplated herein, such as but not limited to the rack and pinion/gearing approach discussed below with respect to FIGS. 7 and 8.

The extension member 108 can be enclosed in a covering, or can rest freely underneath the base 106 when in the retracted position. For example, FIGS. 4-6 illustrate the extension member 108 that extends below a covering 116 when in the retracted position (best seen in FIG. 4), while the portion remaining below the base 106 is covered by the covering 116 when in the deployed position (best seen in FIG. 5). Any size and shape of covering 116 can be used.

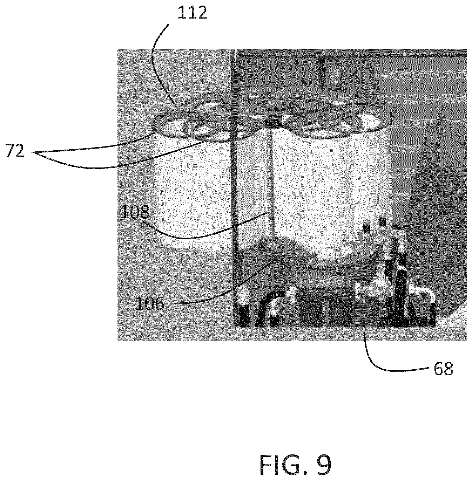

The arm 112 is used to reach from the base 106 to the filter element 72 when removing the element 72. The arm 112 can, but need not, be pivoted about the base 106 to allow the filter element 72 to be moved from an initial extraction position starting over the filter housing 68 just above its nested position, to a position in which the filter element 72 can be lowered into a container (e.g. a rubbish container) positioned to the side of the housing 68. The arm 112 can alternatively and/or additionally be structured to pivot about the extension member 108. The pivoting movement, whether about the base 106 or about the base 106 and extension member 108, is illustrated and discussed further below in FIGS. 9-11. Furthermore, the arm 112 can also be formed as an extension member such as but not limited to a telescoping extendable mechanism. In other forms the arm 112 can be a simple rigid rod.

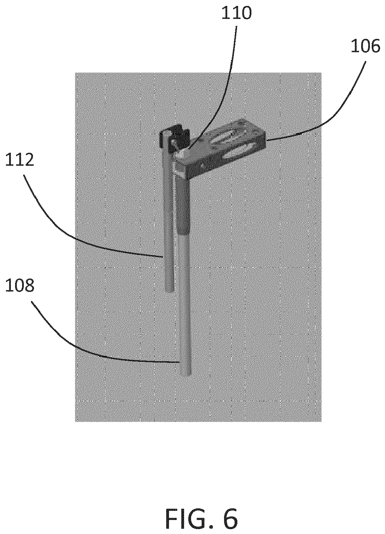

FIG. 6 illustrated one embodiment in which the arm 112 can be pivoted about an axis transverse to the extension member 108 and stowed in a collapsed position. The arm 112 in the illustrated embodiment is pivoted about an axis formed through an attachment bracket (e.g. through use of a pin, hinge, etc) and moved to a position roughly parallel to an axis about which the extension member 108 can be deployed into position to extract the filter element 72.

FIGS. 7-8 depict yet another embodiment of the filter removal tool 82 in which the driver 110 includes a gearing 118 which can take many different forms. The gearing 118 can include one or more gears useful to translate power provided from an external device (e.g. a pneumatic driver, an electric drill driver, electric power from a power outlet to an onboard actuator, etc) into mechanical work used to actuate the extension member 108. The driver 110, therefore, can include any number of useful interfaces to receive power from an external device. In one nonlimiting form the driver 110 can include a stub configured to receive a socket driven by a pneumatic or electric driver, and in which the driver can in some forms additionally include one or more internal gears useful to engage the registration surface of the extension member 108. In one form the driver 110 includes a pinion that can engage the extension member 108 in the form of a rack, such as are provided in a rack and pinion connection.

In some forms a lock 120 can be provided to provide positive locking force to discourage relative movement of the extension member 108 and the base 106. In one form the lock 120 can be used to discourage movement of the extension member 108 into the retracted position (e.g. the position shown in FIG. 4) to mitigate unintended premature retraction of the extension member 108. In other forms the lock 120 can be used to discourage any movement or movement into the extended position (e.g. shown in FIG. 5) unless otherwise unlocked by a user. The lock 120 can take many forms, one of which is a pawl used to engage gear teeth of one embodiment of the driver 110.

The filter removal tool 82 can furthermore include a tank seat 122 useful to engage with the filter housing 68. Such a tank seat 122 can take many forms, can be made of any number of materials, and can be located in one or more positions about the tool 82. In the illustrated embodiment the tank seat 122 is located near the bottom of the tool as shown in FIG. 7. The tank seat 122 can travel with the extension member 108, or can remain in place (e.g. in those embodiments where the extension member 10 includes a cover or other suitable stationary device).

The anchor point can take on an additional form as seen in FIGS. 7 and 8. A movable anchor point in the form of movable holes 114. One or more of the holes 114 or abutment surfaces can be pivoted about a pivot point to adjust the distance between the holes 114. In another alternative and/or additional embodiment, the holes 114 can further be adjusted length away from some position. For example, the V-shaped arrangement shown in FIG. 8 could include one or more holes 114 that can be extended further along the angle at which they are currently set as illustrated in the figure.

The arm 112 can include a telescoping feature made possible via a bearing construction. Two such bearings 124 are shown in FIG. 8. The bearings can take on any variety of forms including a simple contact bearing, roller bearing element, etc.

The arm 112 can also include a hook or other suitable device 112 useful to engage the filter capture tool 80 and/or any other suitable structure associated with the filter element 72 (e.g. as discussed above) used to remove the filter element 72 from the housing 68.

Features illustrated in the embodiment depicted in FIGS. 4-6 can also be used in the embodiment depicted in FIGS. 7-8, and vice versa. To set forth just one nonlimiting example, the tank seat 122 shown in FIGS. 7-8 could be used in the embodiment depicted in FIGS. 4-6. No limitation is hereby intended regarding the features shown in any given embodiment being limited to only that embodiment.

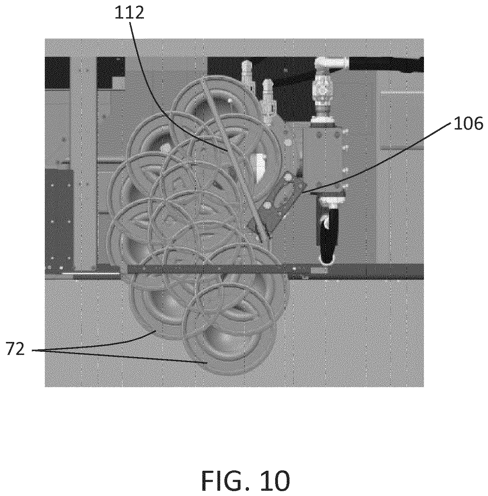

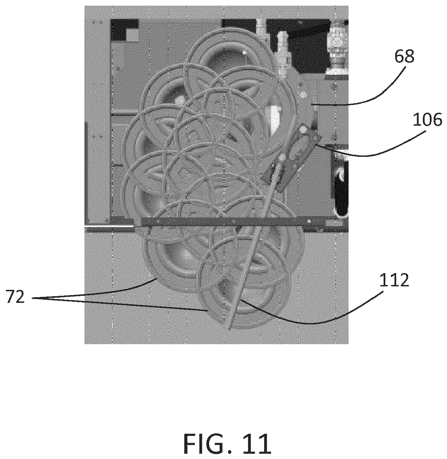

Turning now to FIGS. 9-11, one embodiment of the filter removal tool is shown removing a filter element 72 from a filter housing 68. Various positions are shown of the filter element 72 as it is moved from a position over the housing 68 to an external position away from the housing 68. It will thus be appreciated that although many different images are shown of the filter element 72, in fact such an illustration is merely showing the various intermediate positions of the filter element 72 during a removal or installation process. The arm 112 can be seen in FIG. 10 positioned over the housing 68, while the same arm 112 is depicted in FIG. 11 as supporting the filter element 72 in a position external to the housing 68.

It will be appreciated herein that the filter capture tool 80 and/or filter removal tool 82 can be deployed in many different manners to secure the filter in a nesting position, hoist the filter element 72 from the housing 68, and move the filter element 72 to an extracting position and/or lower the filter onto a support surface from which it can be removed for disposal. As used herein, a nesting position can be used to refer to the position of the filter element 72 being nested into place within the housing 68 prior to removal. The extracting position can be used to refer to the position of the filter element 72 adequate for disposal into a container or intermediate processing platform prior to disposal, for example.

For the avoidance of doubt, the subject-matter of the present application may extend to any combination of the following aspects and features.

One aspect of the present application includes an apparatus comprising a filter removal tool having: a base having an anchor connection device structured to be coupled to a support for removal of a filter, an extension member structured to extend from the base between a nesting position to an extracting position, the extension member having an axis of extension between the nesting position and the extracting position, a driver interconnected with the extension member and structured to move the extension member between the nesting position and the extracting position upon receipt of a power to drive the extension member, and an arm connected to the extension member and oriented transverse to the axis of extension such that the filter is cantilevered when attached to the filter removal tool, the filter removal tool further configured to pivot the arm about the axis of extension to rotate the filter away from a compressor filter housing, wherein the base of the filter removal tool is structured to support the torque and force loads associated with the cantilevered condition.

A feature of the present application includes wherein the anchor connection device includes an abutment which a bolt can be engaged to secure the base to the support.

Another feature of the present application includes wherein the anchor connection device is a first movable aperture structured to be movable relative to the extension member.

Still another feature of the present application includes wherein the anchor connection device includes a second movable aperture, the first and second movable apertures structured to accommodate different configurations of the support, and wherein the first movable aperture is pivotable about an axis.

Yet another feature of the present application includes wherein the extension member is a member that linearly extends from the base.

Still yet another feature of the present application includes wherein the extension device is a rack having a plurality of teeth structured to engage a gear driven by work received via the driver.

Yet still another feature of the present application further includes a gearing that can convert a first torque and first speed received by the driver to a second torque and second speed used to extend the extension member.

A still yet further feature of the present application further includes a filter capture tool having a plurality of arms structured to engage an interior surface of a filter, the filter capture tool capable of being connected to the arm of the filter removal tool.

A yet still further feature of the present application includes wherein the filter capture tool further includes a central threaded shaft affixed to a platform, the central threaded shaft having a complementary collar structured to move along a length of the central threaded shaft to deploy the plurality of arms, wherein the filter capture tool is capable of being connected to the filter removal tool via a hook and loop connection, and wherein the filter is a separator element.

Another aspect of the present application provides an apparatus comprising a filter capture tool having a central shaft affixed to a base and a collar structured to move along a length of the central shaft, the central shaft having a shaft registration surface and the collar having a collar registration surface complementary to the shaft registration surface such that relative movement of the collar registration surface to the shaft registration surface enables the collar to move along the length of the central shaft, the filter capture tool further including a plurality of arms that extend from and are pivotably attached to the base, the plurality of arms each including an engagement surface structured to engage an inner surface of a filter used in a compressor system, the plurality of arms connected to the collar via a linkage member.

A feature of the present application includes wherein the engagement surface of each of the plurality of arms is a pivotable pad structured to engage an inner surface of a filter used in a compressor system.

Another feature of the present application includes wherein each of the plurality of arms is connected to the collar via its own linkage member.

Still another feature of the present application includes wherein the collar further includes an actuation member having the collar registration surface to enable movement of the collar along the length of the central shaft.

Yet another feature of the present application includes wherein the shaft registration surface is a threaded formation.

Still yet another feature of the present application includes wherein the actuation member is a threaded nut captured by the collar such that the nut is capable of rotation about the central shaft while the collar does not rotation about the central shaft, and wherein the filter is a separator element.

Yet still another feature of the present application further includes a filter removal tool including an extension member capable of being deployed from a nested position to an extended position, the extension member attached to an arm that is configured to connect to the filter capture tool.

A further feature of the present application includes wherein the filter removal tool further includes a base structured to attach to a filter housing and sustain loads imparted during removal of a filter when the plurality of arms are deployed to engage the filter, and wherein the extension member includes a rod having a rod registration surface.

Yet another aspect of the present application provides a method comprising connecting a filter removal tool to a compressor filter housing, inserting a filter capture tool into the interior of a filter, expanding the filter capture tool to engage a side of the filter, connecting the filter capture tool to the filter removal tool, and raising an arm of the filter removal tool to extract the filter from the compressor filter housing

A feature of the present application further includes pivoting the arm away from the base.

Another feature of the present application includes wherein the filter removal tool further includes an extension member connected to the arm, wherein raising the arm includes extending the extension member.

Still another feature of the present application includes wherein pivoting the arm includes pivoting the extension member away from the base.

Yet still another feature of the present application includes wherein the connecting the filter includes seating a base of the filter removal tool against a flange of the compressor filter housing and aligning an anchor point to bolt holes formed in the compressor filter housing.

Still yet another feature of the present application further includes which further includes installing a bolt used to secure a cover member of the compressor filter housing to secure a base of the filter removal tool to the compressor filter housing, and wherein the filter housing is a separator housing and wherein the filter is a separator element.

While the invention has been illustrated and described in detail in the drawings and foregoing description, the same is to be considered as illustrative and not restrictive in character, it being understood that only the preferred embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. A filter removal tool having:
a base having an anchor connection device structured to be coupled to a support for removal of a filter;
an extension member structured to extend from the base between a nesting position to an extracting position, the extension member having an axis of extension between the nesting position and the extracting position;
a driver interconnected with the extension member and structured to move the extension member between the nesting position and the extracting position upon receipt of a power to drive the extension member; and
an arm connected to the extension member and oriented transverse to the axis of extension such that the filter is cantilevered when attached to the filter removal tool, the filter removal tool further configured to pivot the arm about the axis of extension to rotate the filter away from a compressor filter housing, wherein the base of the filter removal tool is structured to support the torque and force loads associated with the cantilevered condition.

2. The filter removal tool of claim 1, wherein the anchor connection device is a first movable aperture structured to be movable relative to the extension member.

3. The filter removal tool of claim 2, wherein the anchor connection device includes a second movable aperture, the first and second movable apertures structured to accommodate different configurations of the support, and wherein the first movable aperture is pivotable about an axis.

4. The filter removal tool of any preceding claim, wherein the extension member is a rack having a plurality of teeth structured to engage a gear driven by work received via the driver.

5. The filter removal tool of any preceding claim, which further includes a gearing that can convert a first torque and first speed received by the driver to a second torque and second speed used to extend the extension member.

6. A filter capture tool having a central shaft affixed to a base and a collar structured to move along a length of the central shaft, the central shaft having a shaft registration surface and the collar having a collar registration surface complementary to the shaft registration surface such that relative movement of the collar registration surface to the shaft registration surface enables the collar to move along the length of the central shaft, the filter capture tool further including a plurality of arms that extend from and are pivotably attached to the base, the plurality of arms each including an engagement surface structured to engage an inner surface of a filter used in a compressor system, the plurality of arms connected to the collar via a linkage member.

7. The filter capture tool of claim 6, wherein the engagement surface of each of the plurality of arms is a pivotable pad structured to engage an inner surface of a filter used in a compressor system.

8. The filter capture tool of claim 6 or 7, wherein the collar further includes an actuation member having the collar registration surface to enable movement of the collar along the length of the central shaft.

9. The filter capture tool of any of claims 6 to 8, wherein the shaft registration surface is a threaded formation; and
wherein the actuation member is a threaded nut captured by the collar such that the nut is capable of rotation about the central shaft while the collar does not rotate about the central shaft, and wherein the filter is a separator element.

10. An apparatus comprising the filter removal tool of any of claims 1 to 5 and the filter capture tool of any of claims 6 to 9, wherein the filter capture tool is capable of being connected to the arm of the filter removal tool.

11. A method comprising:
connecting a filter removal tool to a compressor filter housing;
inserting a filter capture tool into the interior of a filter;
expanding the filter capture tool to engage a side of the filter;
connecting the filter capture tool to the filter removal tool; and
raising an arm of the filter removal tool to extract the filter from the compressor filter housing.

12. The method of claim 11, which further includes pivoting the arm away from a base of the filter removal tool.

13. The method of claim 11 or 12, wherein the filter removal tool further includes an extension member connected to the arm, wherein raising the arm includes extending the extension member.

14. The method of any of claims 11 to 13, wherein the connecting the filter includes seating a base of the filter removal tool against a flange of the compressor filter housing and aligning an anchor point to bolt holes formed in the compressor filter housing.

15. The method of claim 14, which further includes installing a bolt used to secure a cover member of the compressor filter housing to secure a base of the filter removal tool to the compressor filter housing, and wherein the filter housing is a separator housing and wherein the filter is a separator element.
